# EUROPÄISCHE PATENTSCHRIFT

(11) **EP 3 580 938 B1**
(45) Veröffentlichungstag und Bekanntmachung des Hinweises auf die Patenterteilung: **17.02.2021**
(21) Anmeldenummer: 18700015.3
(22) Anmeldetag: 02.01.2018
(51) Int. Cl.: H04W 4/02, H04W 4/80, H04L 29/08, G01S 5/02, H04W 12/00, H04W 12/12

(54) **VERFAHREN ZUR POSITIONSBESTIMMUNG EINES MOBILEN BLE-GERÄTS RELATIV ZU EINEM FAHRZEUG**
METHOD FOR DETERMINING RELATIVE POSITION OF A BLE-DEVICE WITH RESPECT TO A VEHICLE
PROCÉDÉ DE DÉTERMINATION DE LA POSITION RELATIVE D'UN DISPOSITIF BLE PAR RAPPORT À UN VÉHICULE

(30) Priorität: 09.02.2017 DE 102017102622; 09.06.2017 DE 102017112802
(43) Veröffentlichungstag der Anmeldung: 18.12.2019
(73) Patentinhaber: Huf Hülsbeck & Fürst GmbH & Co. KG, 42551 Velbert (DE)
(72) Erfinder: GORSKI, Herr David, 47057 Duisburg (DE)
(74) Vertreter: Zenz Patentanwälte Partnerschaft mbB
(86) Internationale Anmeldenummer: PCT/EP2018/050061
(87) Internationale Veröffentlichungsnummer: WO 2018/145821

(56) Entgegenhaltungen:
- US-A1- 2013 259 230
- US-B1- 9 463 325
- US-B2- 9 008 917
- DOBRILOVIC DALIBOR ET AL: "Platform for teaching communication systems based on open-source hardware", 2015 IEEE GLOBAL ENGINEERING EDUCATION CONFERENCE (EDUCON), IEEE, 18. März 2015 (2015-03-18), Seiten 737-741, XP032771099, DOI: 10.1109/EDUCON.2015.7096051 [gefunden am 2015-04-27]
- HALE MATTHEW L ET AL: "Secu Wear: An Open Source, Multi-component Hardware/Software Platform for Exploring Wearable Security", 2015 IEEE INTERNATIONAL CONFERENCE ON MOBILE SERVICES, IEEE, 27. Juni 2015 (2015-06-27), Seiten 97-104, XP033212022, DOI: 10.1109/MOBSERV.2015.23 [gefunden am 2015-08-26]

## Beschreibung

Die Erfindung betrifft ein Verfahren zur Positionsbestimmung eines mobilen BLE-Geräts relativ zu einem Fahrzeug.

Bei Fahrzeugen ist zunehmend der Einbau von elektronischen Schließsystemen üblich. Bekannte elektronische Schließsysteme basieren auf einer Verwendung von Funkschlüsseln, die mittels Funk mit dem Fahrzeug kommunizieren. Derartige Systeme sind beispielsweise unter den Bezeichnungen Passive Entry/Passive Start (PEPS) und Remote Keyless Entry (RKE) geläufig. Derartige Systeme sind oft basierend auf einer Kombination von niederfrequenter und hochfrequenter Funkkommunikation (LF- und HF-Frequenzbereiche, letztere in der Regel im UHF-Bereich) eines ID-Gebers mit einer zentralen Steuereinheit des Fahrzeugs ausgebildet.

Ein Beispiel für ein PEPS-System geht aus der US 9,008,917 B2 hervor. Aus dieser Druckschrift geht insbesondere hervor, dass am Fahrzeug eine Mehrzahl von Sensoren angeordnet sein kann und dass eine Kommunikation zwischen einem Endgerät, beispielsweise einem Smartphone, und einem Zentralmodul eines Fahrzeugs mittels Bluetooth-Low-Energy-Kommunikation, kurz:BLE, durchgeführt werden kann.

Zur Verbesserung des Bedienkomforts sowie zum Schutz vor Manipulationen ist in vielen Fällen üblich, fahrzeugseitig die Position des ID-Gebers relativ zu dem Fahrzeug zu ermitteln. Hierzu wird in vielen Fällen die vom ID-Geber bereitgestellte LF-Kommunikation genutzt, da in diesem Frequenzbereich mit geringerem Aufwand und mit höherer Genauigkeit Positionsbestimmungen möglich sind, als im HF-Frequenzbereich. Eine andere Möglichkeit zur Positionsbestimmung besteht in der Nutzung von NFC-Chips in einem ID-Geber.

Bei den bekannten auf LF- und HF-Kommunikation basierten Systemen ist in der Regel die Nutzung von proprietären ID-Gebern erforderlich. Diese sind aufgrund ihres proprietären Charakters nicht oder nur wenig anpassbar. Außerdem ist das erforderliche stete Mitführen des ID-Gebers dem Bedienkomfort für den Benutzer abträglich.

Vor diesem Hintergrund liegt der Erfindung die Aufgabe zugrunde, eine Alternative für die bekannten LF/HF-basierten Systeme bereitzustellen. Eine derartige Alternative soll zum einen eine hohe Genauigkeit einer Positionsbestimmung bei guter Manipulationssicherheit erlauben. Die Positionsbestimmung soll darüber hinaus auch mit hoher Geschwindigkeit möglich sein.

Die Aufgabe wird mit einem Verfahren zur Positionsbestimmung eines mobilen BLE-Geräts relativ zu einem Fahrzeug mit den Merkmalen des Anspruchs 1 gelöst.

Vorteilhafte und zweckmäßige Ausgestaltungen und Weiterbildungen der Erfindung ergeben sich aus den Unteransprüchen.

Für das Verfahren zur Positionsbestimmung eines mobilen BLE-Geräts ist vorgesehen, dass das BLE-Gerät eine BLE-Schnittstelle und das Fahrzeug ein System von BLE-Schnittstellen aufweist. Das System von BLE-Schnittstellen des Fahrzeugs umfasst eine BLE-Zentralschnittstelle und wenigstens eine erste BLE-Satelliten-Schnittstelle. Bevorzugt weist das Fahrzeug wenigstens eine weitere, zweite BLE-Satelliten-Schnittstelle auf. Besonders bevorzugt sind wenigstens drei BLE-Satelliten-Schnittstellen in dem Fahrzeug angeordnet.

Das Akronym BLE steht für Bluetooth Low Energy. Bluetooth Low Energy ist ein Kommunikationsprotokoll, welches in den Bluetooth-Spezifikationen mit der Versionsnummer 4.0 und neuer spezifiziert ist (siehe
https://www.bluetooth.com/specifications/adopted-specifications) .

Der Begriff der BLE-Schnittstelle bezieht sich auf eine Gesamtheit von Komponenten, welche für eine BLE-Kommunikation gemäß Bluetooth-Spezifikation geeignet ist. Es sind also sämtliche zum spezifikationsgemäßen Betrieb erforderlichen hardware- wie softwaremäßigen Voraussetzungen vorhanden, wobei eine von einer der Bluetooth-Spezifikationen noch zugelassene Minimalerfüllung der für BLE-Kommunikation erforderlichen Voraussetzungen ausreichend ist. Insbesondere weist die BLE-Schnittstelle auch eine Antenne auf. Bei einer BLE-Schnittstelle kann es sich beispielsweise um ein Modul handeln, welches sämtliche zur BLE-Kommunikation erforderlichen Voraussetzungen erfüllt; aber auch eine Gesamtheit von miteinander gekoppelten Einzelkomponenten kann vorgesehen sein. Wesentlich ist lediglich, dass die Eignung zur BLE-Kommunikation gemäß Bluetooth-Spezifikation gegeben ist. Soweit ein Bezug auf eine Position einer BLE-Schnittstelle hergestellt wird, ist hiermit die Position der Antenne der BLE-Schnittstelle gemeint, da an dieser der Empfang eines Signals erfolgt.

Der Begriff des mobilen BLE-Geräts bezeichnet ein für einen Bediener portables Gerät, welches sämtliche Voraussetzungen hinsichtlich Hardware- und Softwareausstattung umfasst, die für eine BLE-Kommunikation erforderlich sind. Ein Beispiel für ein mobiles BLE-Gerät sind moderne Smartphones, die in vielen Fällen die BLE-Kommunikation als Bestandteil der Bluetooth-Funktionalität gemäß Spezifikation in Version 4.0 oder neuer von Hause aus mitbringen.

Des Weiteren ist vorgesehen, dass die erste BLE-Satelliten-Schnittstelle mit einem Sniffer-Modul gekoppelt ist oder die erste BLE-Satelliten-Schnittstelle ein Sniffer-Modul aufweist. Der Begriff des Sniffer-Moduls bezeichnet dabei die Gesamtheit von erforderlichen Maßnahmen, mit denen die BLE-Satelliten-Schnittstelle befähigt wird, eine Kommunikation zwischen zwei anderen BLE-Schnittstellen mitzuhören. Es kann die bloße Befähigung der BLE-Satelliten-Schnittstelle zum Mithören einer BLE-Kommunikation mittels Softwareanpassungen gemeint sein. Aber auch die Erweiterung der BLE-Satelliten-Schnittstelle mit hard- und softwaremäßigen Mitteln wie auch die Kopplung der BLE-Satelliten-Schnittstelle mit entsprechenden hard- und softwaremäßigen Mitteln kann vorgesehen sein. Auf die konkrete Ausgestaltung kommt es nicht an, wesentlich ist die vorhandene Befähigung der BLE-Satelliten-Schnittstelle, eine BLE-Kommunikation zwischen BLE-Schnittstellen mitlesen zu können.

Ein Beispiel für ein Sniffer-Modul ist das kommerziell erhältliche CC2540 Bluetooth Low Energy USB Dongle in Kombination mit dem CC2540 Evaluation Module Kit, das von Texas Instruments angeboten wird (siehe beispielsweise http://www.ti.com/tool/CC2540EMK-USB, abgerufen am Anmeldetag dieser Anmeldung).

In einer Ausgestaltung kann die Verwendung des CC2540 USB Dongles in Kombination mit der von Texas Instruments angebotenen Softwareanwendung SmartRF Packet Sniffer zur Nutzung im Rahmen des erfindungsgemäßen Verfahrens vorgesehen sein, wobei dann der Dongle als BLE-Satelliten-Schnittstelle mit integriertem Sniffer-Modul aufzufassen ist.

Letztlich kommt es auf die konkrete Ausgestaltung des Sniffer-Moduls jedoch nicht an; auch eine eventuelle Anpassung spezifikationsgemäßer BLE-Schnittstellen zur Erweiterung um die Fähigkeit des Mithörens kann vorgesehen sein, so dass aus mitgehörten Paketen Informationen ausgelesen und ausgewertet werden können.

Das Verfahren umfasst die folgenden Schritte:
- Aktivieren des Sniffer-Moduls;
- Etablierung einer Verbindung zwischen der BLE-Zentralschnittstelle und dem mobilen BLE-Gerät;
- Mithören der Etablierung der ersten Verbindung zwischen der BLE-Zentralschnittstelle und dem mobilen BLE-Geräts mittels des Sniffer-Moduls der ersten BLE-Satelliten-Schnittstelle;
- nach dem Mithören der Etablierung der ersten Verbindung werden ermittelte Übertragungsparameter genutzt, um eine Kommunikation zwischen der BLE-Zentralschnittstelle und dem BLE-Gerät im Connection Mode mitzuhören;
- wiederholtes Erfassen der Signalstärke von durch das mobile BLE-Gerät gesendeten Daten an der Position der ersten BLE-Satelliten-Schnittstelle für die Positionsbestimmung des mobilen BLE-Geräts relativ zu dem Fahrzeug;
- Auswerten mehrerer nacheinander an der Position der ersten BLE-Schnittstelle erfasster Signalstärken.

Es ist also vorgesehen, zunächst eine BLE-Kommunikation im Stadium der Etablierung der Verbindung auszulesen. Bei der ausgelesenen BLE-Kommunikation handelt es sich um eine Kommunikation zwischen der BLE-Zentralschnittstelle und dem mobilen BLE-Gerät. Es ist mit der BLE-Zentralschnittstelle also eine zentrale Kommunikationseinheit vorgesehen, deren Aufgabe darin besteht, verschlüsselten oder unverschlüsselten Datenaustausch mit dem mobilen BLE-Gerät zu generieren, der gewissermaßen die Basis für die Erfassung von Signalstärken an mehreren Positionen des Fahrzeugs ist, nämlich an wenigstens der Position der ersten BLE-Satelliten-Schnittstelle, bevorzugt an weiteren Positionen von weiteren BLE-Satelliten-Schnittstellen.

Das Aktivieren des Sniffer-Moduls startet das Mithören von BLE-Kommunikation in der Umgebung. Insbesondere kann eine BLE-Kommunikation der BLE-Zentralschnittstelle und des mobilen BLE-Geräts mitgehört werden. Dafür kann vorgesehen sein, dass die BLE-Satelliten-Schnittstelle inklusive des Sniffer-Moduls, beispielsweise nach dem Koppeln des BLE-Geräts und der BLE-Zentralschnittstelle, mit den erforderlichen Information, beispielsweise den User IDs, ausgestattet wird.

Das Etablieren der Verbindung zwischen der BLE-Zentralschnittstelle und dem mobilen Gerät kann beispielsweise von der Konstellation ausgehend gestartet werden, dass das mobile BLE-Gerät im Advertising Mode befindlich ist. Bei Empfang des Advertising Modes durch die BLE-Zentralschnittstelle kann beispielsweise ein Connect Request erfolgen, welches wiederum mit einer Connect Confirmation beantwortet wird. Aber auch eine andere Ausgestaltung des Etablierens der Verbindung zwischen der BLE-Zentralschnittstelle und dem mobilen BLE-Gerät kann vorgesehen sein. Wesentlich ist, dass nach dem Aktivieren des Sniffer-Moduls eine unverschlüsselte Kommunikation zwischen dem BLE-Gerät und der BLE-Zentralschnittstelle mit dem Ziel der Verbindungsherstellung erfolgt.

Aus den mitgehörten Daten werden Übertragungsparameter ermittelt. Die ermittelten Übertragungsparameter werden genutzt, um eine Kommunikation zwischen der BLE-Zentralschnittstelle und dem mobilen BLE-Gerät im Connection Mode mithören zu können. Die durch das Mithören erlangten Informationen müssen dabei nicht hinreichend sein, um mit dem Mithören im Connection Mode fortfahren zu können. Insbesondere der gegebenenfalls für die Entschlüsselung der Kommunikation erforderliche Session Key muss nicht zwangsläufig aus dieser mitgehörten Etablierung der Verbindung extrahiert werden.

Sobald die Kommunikation der BLE-Zentralschnittstelle mit dem mobilen BLE-Gerät im Connection Mode stattfindet, erfasst die erste BLE-Schnittstelle die Signalstärke von Daten, welche von dem mobilen BLE-Gerät ausgesendet werden. Die Signalstärke wird wenigstens einmal hinterlegt. Zu einem späteren Zeitpunkt wird die hinterlegte Signalstärke, die bevorzugt durch einen RSSI-Wert repräsentiert ist, für eine Positionsbestimmung des mobilen BLE-Geräts relativ zu dem Fahrzeug genutzt. Insbesondere kann ein Auswerten mehrerer nacheinander an der Position der ersten BLE-Schnittstelle erfasster Signalstärken vorgenommen werden. Wesentlich ist, dass ein wiederholtes Erfassen der Signalstärke von durch das mobile BLE-Gerät gesendeten Daten an der Position der ersten BLE-Schnittstelle erfolgt. Es erfolgt somit nicht nur ein einmaliges Erfassen der Signalstärke, sondern nach dem ersten Erfassen ein wenigstens zweites Erfassen und bevorzugt möglichst viele Erfassungsvorgänge der Signalstärke. Eine Implementierung des Erfassens der Signalstärke hinsichtlich Anzahl der abgelegten Werte und Zeitabstände zwischen zwei Erfassungen kann dahingehend vorgenommen werden, dass Energieverbrauch, Datensicherheit und Zeitaufwand in einer gewünschten Relation zueinander stehen.

Dadurch, dass die Kommunikation zwischen der BLE-Zentralschnittstelle und dem mobilen BLE-Gerät im Connection Mode mitgehört wird, können sämtliche 37 spezifikationsgemäß vorgesehenen Kanäle sowie das spezifikationsgemäß vorgesehene Frequenzwechseln (Frequency Hopping) in vorteilhafter Weise genutzt werden. Dadurch ergibt sich der Vorteil, dass das Verfahren auch in Anwesenheit vieler unterschiedlicher BLE nutzender Geräte mit geringer Störungsanfälligkeit durchführbar ist.

Das Verfahren geht darüber hinaus mit dem weiteren Vorteil einher, dass die gegenüber dem Advertising Mode höhere Verbindungsgeschwindigkeit des Connection Modes ausgenutzt werden kann. Es kann in einem gleichen Zeitraum eine im Vergleich zu einem Betrieb im Advertising Mode höhere Anzahl von Signalstärkewerten erfasst werden können. Dadurch werden in einem gegebenen Zeitintervall mehr Datenpunkte bereitgestellt und die Datenqualität insgesamt verbessert.

Ein weiterer Vorteil des erfindungsgemäßen Verfahrens besteht darin, dass eine einzige Nachricht von einer Mehrzahl und Vielzahl von Sniffer-Modulen mitgehört werden kann. Somit kann mit dem Aussenden eines einzigen Datenpakets durch das BLE-Gerät eine Vielzahl von Signalstärkedaten an verschiedenen Positionen des Fahrzeugs, je nach Positionierung der BLE-Satelliten-Schnittstellen, ermittelt werden. Ferner kann durch Vergleich der von verschiedenen BLE-Satelliten-Schnittstellen erfassten Daten eine zuverlässige Bestimmung von Ausreißern der Messwertermittlung ermöglicht werden. Nicht zuletzt ist durch die weite Verbreitung der BLE-Funktionalität in modernen Smartphones eine schnelle Verbreitung des erfindungsgemäßen Verfahrens und dessen Akzeptanz bei potentiellen Bedienern zu erwarten.

Bevorzugt erfolgt ein Pairing, um die Sicherheit der Kommunikation zu erhöhen.

In einer vorteilhaften Ausführung des Verfahrens wird nach einem ersten Verbinden des BLE-Geräts nach Annähern des BLE-Geräts mit der BLE-Zentralschnittstelle die Verbindung zwangsweise seitens eines der beiden Geräte beendet. Dadurch wird erreicht, dass ein weiteres Etablieren der Verbindung zwischen BLE-Zentralschnittstelle und BLE-Gerät erzwungen wird, welches sodann von Anfang an von den Sniffer-Modulen mitgehört werden kann.

In einer vorteilhaften Weiterbildung des Verfahrens ist vorgesehen, dass die BLE-Zentralschnittstelle und das mobile BLE-Gerät einen Session Key aushandeln, wobei die BLE-Zentralschnittstelle den Session Key der ersten BLE-Satelliten-Schnittstelle nach dem Aushandeln übermittelt.

Die BLE-Zentralschnittstelle und das mobile BLE-Gerät handeln den Session Key miteinander aus, wenn das Pairing der beiden miteinander erfolgt. Dadurch, dass der Session Key der ersten BLE-Satelliten-Schnittstelle übermittelt wird, ist die erste BLE-Satelliten-Schnittstelle in der Lage, den verschlüsselten Datenverkehr zwischen BLE-Zentralschnittstelle und BLE-Gerät nicht nur mitzuhören. Zusätzlich ist auch möglich, die übermittelten Datenpakete zu entschlüsseln. Dies geht mit dem Vorteil einher, dass nicht nur eine Signalstärke erfasst werden kann, aus der eine Entfernung abgeleitet werden kann; vielmehr kann durch Entschlüsseln der Nachricht und Vergleich der entschlüsselten Nachricht mit einem erwarteten Ergebnis sichergestellt werden, dass der Urheber des ausgesendeten Pakets eine berechtigte Instanz ist.

Es kann vorgesehen sein, dass der Session Key unmittelbar nach dem Aushandeln des Session Keys allen BLE-Satelliten-Schnittstellen mitgeteilt wird. Dadurch steht der Session Key bei einem erneuten Verbinden der BLE-Zentralschnittstelle mit dem BLE-Gerät zur Verfügung.

Die oben erläuterte zwangsweise Beendigung der Verbindung zwischen BLE-Zentralschnittstelle und BLE-Gerät kann gemäß einer Ausführung als Auslöser für die Übermittlung des Session Keys an die BLE-Satellitenschnittstelle und/oder für das Aktivieren des Sniffer-Modus sein.

Gemäß einer weiteren vorteilhaften Ausprägung des Verfahrens werden die Übertragungsparameter *Connection Interval Timing Parameter* und *Frequency Hopping Sequence* genutzt, um das Mithören der Kommunikation zwischen der BLE-Zentralschnittstelle und dem mobilen BLE-Gerät im Connection Mode zu gewährleisten. Durch die Nutzung dieser genannten Übertragungsparameter ist dem Sniffer-Modul die Verfolgung der Kommunikation zwischen BLE-Satelliten-Schnittstelle und BLE-Zentralschnittstelle einfach möglich, da wesentliche Parameter der Paketübertragung dem Sniffer-Modul wie den Kommunikationspartnern BLE-Gerät und BLE-Zentralschnittstelle bekannt sind.

Gemäß einer Weiterbildung kann vorgesehen sein, dass das BLE-Gerät, nachdem es ein von der BLE-Zentralschnittstelle ausgesendetes Datenpaket empfangen hat, in Reaktion ein Antwort-Datenpaket aussendet, das von den Sniffer-Modulen einer oder mehrerer der BLE-Satelliten-Schnittstellen erfasst wird und zur Ermittlung der Signalstärke des Antwort-Datenpakets an dem Ort der jeweiligen BLE-Satelliten-Schnittstelle ausgewertet wird.

Die gesendeten Daten können verschlüsselte, unverschlüsselte und/oder leere Datenpakete umfassen. Als leere Datenpakete können insbesondere Empty_PDU-Pakete vorgesehen sein.

Weiterhin kann vorgesehen sein, dass die BLE-Zentralschnittstelle im Connection Mode verschlüsselte wiederholte Challenge Response Kommunikation durchführt, mit der eine wiederholte Bereitstellung von durch das BLE-Gerät gesendeten Daten erzwungen wird, die von dem Sniffer-Modul mitgehört wird. Das bedeutet, dass eine verschlüsselte Nachricht von der BLE-Zentralschnittstelle zu dem mobilen BLE-Gerät gesendet wird, diese Nachricht, beispielsweise mit dem Session Key, von dem mobilen BLE-Gerät entschlüsselt wird und eine verschlüsselte Antwort an die BLE-Zentralschnittstelle gesendet wird, aus welcher die BLE-Zentralschnittstelle ableiten kann, dass die Nachricht mit dem vorgesehenen Kommunikationspartner durchgeführt ist und/oder die Nachricht eine Antwort auf eine bestimmte Nachricht ist. Durch diese Weiterbildung kann sichergestellt werden, dass der BLE-Satelliten-Schnittstelle genügend Daten bereitgestellt werden, mit denen eine Positionsbestimmung mit hoher Genauigkeit möglich ist, indem eine Mehrzahl oder Vielzahl von Signalstärkewerten an jeder BLE-Satelliten-Schnittstelle erfasst werden können, um danach ausgewertet werden zu können. Durch die verschlüsselte Übermittlung der Challenge-Nachricht und der Response-Nachricht wird die Sicherheit der Bereitstellung von Signalstärkewerten sichergestellt.

Bevorzugt weist das System von BLE-Schnittstellen des Fahrzeugs wenigstens drei BLE-Satelliten-Schnittstellen auf. Eine noch höhere Anzahl von BLE-Satelliten-Schnittstellen ist im Sinne der Genauigkeit zu bevorzugen.

Bei Planung des Fahrzeugs und der Implementierung des Verfahrens ist die Anzahl der vorgesehen BLE-Satelliten-Schnittstellen und deren Positionierung auszulegen. Dabei kann Berücksichtigung finden, dass eine größere Anzahl von BLE-Satelliten-Schnittstellen einerseits eine genauere Positionsermittlung möglich macht, andererseits jedoch auch mit höheren Installationskosten und höherer Gesamtleistungsaufnahme einhergeht.

Gemäß einer Ausführung ist vorgesehen, dass eine oder mehrere, bevorzugt jede, gegebene BLE-Schnittstelle der fahrzeugseitigen BLE-Schnittstellen, insbesondere der BLE-Satelliten-Schnittstellen, die Advertise-Daten nur bei ihrem ersten Empfang durch die gegebene BLE-Schnittstelle für die Auswertung akzeptiert und/oder im Connection Mode gesendete Nachrichten nur bei ihrem ersten Empfang durch die gegebene BLE-Schnittstelle für die Auswertung akzeptiert werden.

Dadurch, dass jede der BLE-Schnittstellen einmal bestimmte Advertise- und/oder im Connection Mode gesendete Daten nur jeweils beim ersten Empfang akzeptiert, kann mit hoher Sicherheit unterstellt werden, dass die empfangenen Daten von der tatsächlichen Position des BLE-Geräts aus gesendet wurden und dass keine Manipulation von einer dritten Stelle vorliegt. Denn ein Kopieren und erneutes Senden derselben Daten würde zu einem zweiten Empfangen der gleichen Daten führen.

Mit dem erfindungsgemäßen Verfahren wird somit auch erreicht, dass die Durchführung von Relay-Station-Attacken oder Man-in-the-Middle-Attacken erschwert wird.

Gemäß einer Weiterbildung des Verfahrens ist vorgesehen, dass das fahrzeugseitige System von BLE-Schnittstellen eine BLE-Long-Range-Schnittstelle aufweist. Alternativ kann vorgesehen sein, dass eine der BLE-Satelliten-Schnittstellen als BLE-Long-Range-Schnittstelle ausgebildet ist. Weiterhin kann vorgesehen sein, dass die BLE-Zentralschnittstelle sich in einem energieaufnahmereduzierten Modus (sleep mode) befindet, aus dem sie mittels eines Wecksignals in den aktiven Zustand versetzt wird. Das Wecksignal wird von der BLE-Long-Range-Schnittstelle ausgegeben, nachdem die BLE-Long-Range-Schnittstelle ein Advertise-Signal eines genäherten BLE-Geräts erfasst.

Bei der BLE-Long-Range-Schnittstelle handelt es sich um eine hard- und softwaremäßige Umsetzung der mit Version 5.0 der Bluetooth-Spezifikation eingeführten LE-Long-Range-Funktionalität.

Mit der zusätzlichen Bereitstellung einer BLE-Long-Range-Schnittstelle wird erreicht, dass der Großteil der Bauteile des vorhandenen Systems sich die meiste Zeit über in einem energiesparenden Zustand befindet und erst bei Annähern eines mobilen BLE-Geräts die Arbeitsbereitschaft der BLE-Schnittstellen herbeigeführt wird. Dadurch, dass mit der BLE-Long-Range-Schnittstelle ein vergleichsweiser großer Radius abgedeckt wird, ist zudem die rechtzeitige Sicherstellung der Arbeitsbereitschaft des Gesamtsystems gewährleistet.

In einer Ausprägung kann vorgesehen sein, dass die BLE-Long-Range-Schnittstelle ein Wecksignal ausgibt unter der Voraussetzung, dass das Advertise-Signal des genäherten BLE-Geräts auf eine der BLE-Long-Range-Schnittstelle vorbekannte Gerätekennung des BLE-Geräts hinweist. Alternativ oder zusätzlich kann die Erfüllung der Bedingung gefordert sein, dass das Advertise-Signal mit einem RSSI-Wert oberhalb eines vorgegebenen Schwellwerts erfasst wird. Durch diese Maßnahmen können flexibel die Bedingungen eingestellt werden, unter denen die Wachschaltung der BLE-Zentralschnittstelle erfolgt.

Alternativ kann anstelle einer BLE-Long-Range-Schnittstelle und zur Durchführung der für diese vorgesehenen Verfahrensschritte ein angepasster Bluetooth-Chip, insbesondere gemäß der Bluetooth-4.0-Spezifikation vorgesehen sein, der für ein im Vergleich zu den übrigen fahrzeugseitigen BLE-Schnittstellen längerreichweitiges Senden und/oder Empfangen eingerichtet ist, beispielsweise durch entsprechende Anpassung der Antenne und/oder der Antennenansteuerung.

Gemäß einer weiteren vorteilhaften Verfahrensführung kann vorgesehen sein, dass die BLE-Zentralschnittstelle im aktiven Zustand einen Scan zum Auffinden eines BLE-Geräts ausführt, welches als vertrauenswürdiges BLE-Gerät anzusehen ist. Dies kann beispielsweise dadurch bewerkstelligt sein, dass fahrzeugseitig ein Filtern nach den spezifikationsgemäß vorgesehenen UUIDs erfolgt. Aber auch ein Filtern nach anderen Parametern kann vorgesehen sein.

Gemäß einer weiteren Ausgestaltung des Verfahrens kann vorgesehen sein, dass die BLE-Zentralschnittstelle ein Aushandeln eines gemeinsamen Schlüssels mit dem BLE-Gerät mittels Challenge Response veranlasst. Dies bezweckt, dass eine Verbindung zwischen dem BLE-Gerät und der BLE-Zentralschnittstelle möglich ist, die ein verschlüsseltes Kommunizieren erlaubt. Dabei ist vorgesehen, dass der Schlüssel sowohl von dem BLE-Gerät als auch von der BLE-Zentralschnittstelle hinterlegt wird und bis zum Beenden der Verbindung als Session Key genutzt wird. Ob der Schlüssel auf einem Speicherelement der BLE-Zentralschnittstelle oder auf einem weiteren, mit dieser gekoppelten, Speicherelement hinterlegt wird, ist dabei zweitrangig.

Gemäß einer weiteren Ausführung des Verfahrens kann beispielsweise vorgesehen sein, dass die BLE-Satelliten-Schnittstellen sich in einem Sleep-Modus befinden und von einem Wecksignal aufgeweckt werden. Das Wecksignal wird von der BLE-Zentralschnittstelle ausgegeben, nachdem eine Kommunikation zwischen der BLE-Zentralschnittstelle und dem BLE-Gerät einen vorgegebenen Status eingenommen hat. Es ist also vorgesehen, dass die BLE-Satelliten-Schnittstellen aufgeweckt werden, wenn zwischen der BLE-Zentralschnittstelle und dem BLE-Gerät ein bestimmter Status der Kommunikation erreicht ist. Beispielsweise kann vorgesehen sein, dass mit Etablieren einer Verbindung zur verschlüsselten Verbindung die hinreichende Voraussetzung erfüllt ist, dass das Wecksignal für die BLE-Satelliten-Schnittstellen ausgegeben wird. Die beschriebene Maßnahme bewirkt eine weitere Reduktion der Energieaufnahme.

Weitere Einzelheiten, Merkmale und Vorteile des erfindungsgemäßen Verfahrens ergeben sich aus der nachfolgenden Beschreibung im Zusammenhang mit den Figuren, in denen beispielhaft Ausführungsbeispiele der Erfindung dargestellt sind.

Es versteht sich, dass die vorstehend genannten wie auch nachfolgend erläuterten Merkmale nicht nur in der jeweils angegebenen Kombination, sondern auch in anderen Kombinationen oder in Alleinstellung verwendbar sind.

Es zeigen
Fig. 1: eine schematische Darstellung der Rahmenbedingungen zur Ausführung des erfindungsgemäßen Verfahrens;
Fig. 2: eine beispielhafte Ausführungsform des erfindungsgemäßen Verfahrens;
Fig. 3: eine weitere beispielhafte Ausführungsform des erfindungsgemäßen Verfahrens.

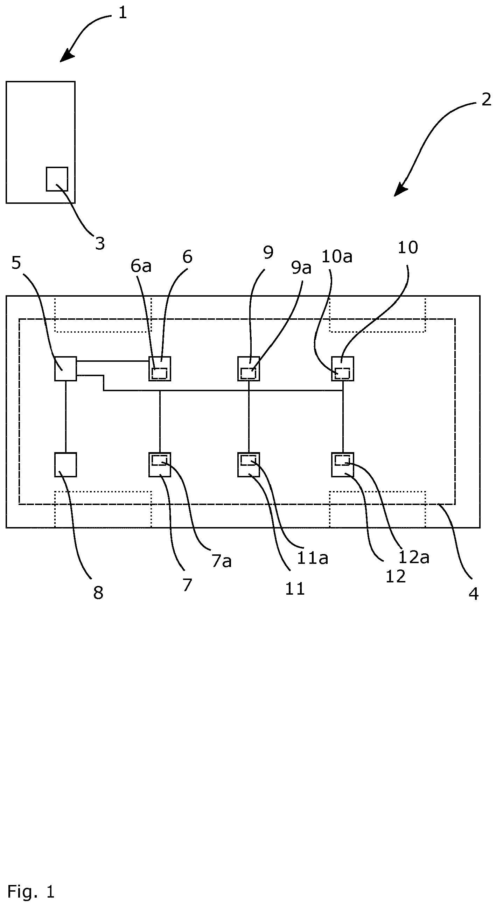

Fig. 1 ist eine beispielhafte Konstellation zu entnehmen, in der das erfindungsgemäße Verfahren ausgeführt werden kann. Fig. 1 ist zum einen ein als Smartphone ausgebildetes BLE-Gerät 1 zu entnehmen, das eine BLE-Schnittstelle 3 aufweist. Ferner ist Fig. 1 eine schematische Darstellung eines Fahrzeugs 2 zu entnehmen. Das Fahrzeug 2 weist ein System 4 von BLE-Schnittstellen auf. Das System 4 von BLE-Schnittstellen umfasst eine BLE-Zentralschnittstelle 5 sowie eine erste BLE-Satelliten-Schnittstelle 6 und eine zweite Satelliten-Schnittstelle 7. In der dargestellten Ausführungsform weist das Fahrzeug ferner noch weitere BLE-Satelliten-Schnittstellen 9, 10, 11 und 12 auf. Alle BLE-Satelliten-Schnittstellen sind mit einem integrierten Sniffer-Modul 6a, 7a, 9a, 10a, 11a und 12a versehen. Die Anzahl und Positionierung der vorgesehenen BLE-Satelliten-Schnittstellen sind im Rahmen der Erfindung unter anderem dahingehend auszuwählen, welche Exaktheit der Positionsbestimmung erreicht werden soll und welche Investitionen für das System selbst in Kauf genommen werden. Die BLE-Satelliten-Schnittstellen 6, 7, 9, 10, 11 und 12 sind mit der BLE-Zentralschnittstelle gekoppelt. Die Kopplung ist in der dargestellten Ausführungsform mittels kabelgebundenen LIN-Bus-Verbindungen ausgeführt; in anderen Ausführungen der Erfindung können auch andere Methoden der Kopplung genutzt werden. Ferner umfasst das System 4 von BLE-Schnittstellen eine BLE-Long-Range-Schnittstelle 8, die ebenfalls mit der BLE-Zentralschnittstelle 5 gekoppelt ist. Das in Fig. 1 dargestellte Ausführungsbeispiel sieht vor, dass sämtliche BLE-Schnittstellen 6, 7, 8, 9, 10, 11 und 12 des Systems 4 in Sternkonzept mit der BLE-Zentralschnittstelle 5 verbunden sind. In anderen Ausführungsformen der Erfindung kann anstelle eines Sternkonzepts auch eine Kopplung in serieller Bus-Verbindung vorgesehen sein.

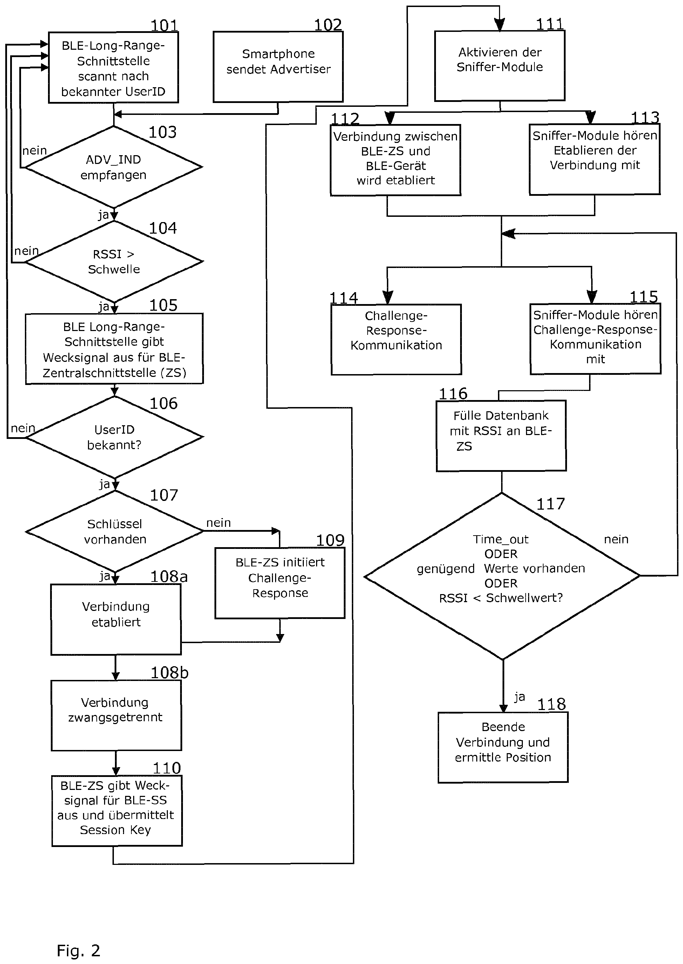

Ein Ausführungsbeispiel für ein erfindungsgemäßes Verfahren ist mit dem Flussdiagramm der Fig. 2 wiedergegeben. Das Verfahren sieht vor, dass in einem ersten Schritt das als Smartphone ausgebildete BLE-Gerät einen Advertiser im Sinne der Bluetooth-Spezifikation aussendet (Schritt 102). Parallel dazu scannt die BLE-Long-Range-Schnittstelle nach User IDs, welche der BLE-Long-Range-Schnittstelle zuvor bekannt gemacht worden sind (Schritt 101). Sobald die Advertise-Daten empfangen wurden (Schritt 103), wird als zusätzliche Bedingung abgeprüft, ob die Intensität der empfangenen Daten auf die Anwesenheit des Smartphones innerhalb einer vorgegebenen begrenzten Umgebung um das Fahrzeug schließen lassen (Schritt 104). Wenn oder sobald die Intensität unterhalb des vorgegebenen Schwellwerts liegt, erfolgt der Abbruch des Verfahrens und die ursprüngliche Konstellation wird mit den Schritten 101 und 102 wieder eingenommen.

Wenn der vorgegebene Schwellwert des RSSI überschritten ist, wird die gewünschte Einsatzbereitschaft des Gesamtsystems angenommen. Um die Einsatzbereitschaft herzustellen, wird von der BLE-Long-Range-Schnittstelle ein Wecksignal ausgegeben, mit dem die im Sleep-Modus befindliche BLE-Zentralschnittstelle in ihren aktiven Zustand versetzt wird (Schritt 105). Die Ausgabe des Wecksignals erfolgt also unter der hinreichenden Bedingungskombination, dass die BLE-Long-Range-Schnittstelle ein Advertise-Signal eines genäherten BLE-Geräts erfasst hat, die Gerätekennung des BLE-Geräts als vorbekannt und berechtigt identifiziert hat und die Überschreitung eines Schwellwerts für den RSSI-Wert mit den empfangenen Advertise-Daten erkannt hat. Da nun eine mögliche Kommunikation mit dem Smartphone erwartet werden kann, wird ein Scanintervall der geweckten BLE-Zentralschnittstelle auf einen geringen Wert zwischen 0,5 und 2,0 s gesetzt.

Sofern eine bekannte und berechtigte UserID erkannt wurde (Schritt 106) und bereits ein Session Key vorliegt (Schritt 107), wird in Antwort auf ein nächstes erhaltenes Advertise-Signal des Smartphones eine Verbindung zwischen der BLE-Zentralschnittstelle und dem Smartphone aufgenommen und etabliert (Schritt 108a). Dies kann beispielsweise dadurch ausgelöst werden, dass das Smartphone zunächst weitere Advertise-Daten aussendet, welche mit einer Connection-Request-Anfrage erwidert wird. In der Reaktion wird entweder eine Connection Confirmation seitens des Smartphones ausgesendet oder, in dem Fall, dass noch kein Session Key vorliegt, von der BLE-Zentralschnittstelle ein Aushandeln eines Session Keys mit dem Smartphone veranlasst (Schritt 109). Für den Fall also, dass kein Session Key hinterlegt ist, wird von der BLE-Zentralschnittstelle ein Challenge-Response-Authentication-Verfahren initiiert mit dem Ziel, das Pairing erfolgreich in eine etablierte Verbindung zu überführen. Dadurch, dass eine etablierte Verbindung vorliegt (von Schritt 108a an), ist eine verschlüsselte Verbindung zwischen der BLE-Zentralschnittstelle und dem Smartphone möglich.

Im Anschluss erfolgt ein erzwungenes Abbrechen der Verbindung (Schritt 108b), das von der BLE-Zentralschnittstelle veranlasst wird. Danach liegt wieder ein Zustand vor, in dessen Rahmen keine verschlüsselte Verbindung zwischen Smartphone und BLE-Zentralschnittstelle mehr unmittelbar möglich ist. Jedoch ist beiden Geräten die Identität des anderen Geräts bekannt und es sind mit dem bereits erfolgten Pairing die Voraussetzungen geschaffen, eine verschlüsselte Verbindung zwischen Smartphone und BLE-Zentralschnittstelle ohne ein erneutes Pairing wiederherzustellen.

In diesem Stadium erfolgt eine Ausgabe eines Wecksignals durch die BLE-Zentralschnittstelle, mit welchem die mit der BLE-Zentralschnittstelle gekoppelten BLE-Satelliten-Schnittstellen (als BLE-SS abgekürzt) aufgeweckt werden (Schritt 110). Das Wecken wird durch Erfüllen der in dieser Ausgestaltung hinreichenden Bedingung ausgelöst, dass die BLE-Zentralschnittstelle registriert hat, dass ein in der Nähe befindliches Smartphone zur Kopplung mit ihr bereit ist und dass die Verbindung mit diesem einmal hergestellt und wieder beendet wurde. Weiterhin umfasst Schritt 110 das Übermitteln des Session Keys an alle BLE-Satelliten-Schnittstellen.

In einem nächsten Schritt wird das Aktivieren der Sniffer-Module veranlasst (Schritt 111). Das Aktivieren der Sniffer-Module wird durch die BLE-Zentralschnittstelle ausgelöst, die ein Aktivierungssignal ausgibt, das sodann über die LIN-Bus-Verbindungen an die an die Sniffer-Module übertragen wird.

Bei einem nächsten detektierten Advertising seitens des Smartphones wird von der BLE-Zentralschnittstelle eine Etablierung einer Verbindung zwischen der BLE-Zentralschnittstelle und dem mobilen BLE-Gerät veranlasst (Schritt 112). Dies erfolgt, indem ein entsprechender Connection Request von der BLE-Zentralschnittstelle an das Smartphone gestellt wird, welches sodann mit einer Connection Confirmation bestätigt wird. Da die Sniffer-Module bereits aktiviert sind, wird von jedem der Sniffer-Module das Etablieren der Verbindung zwischen der BLE-Zentralschnittstelle und dem mobilen BLE-Gerät mitgehört (Schritt 113). Infolge der mitgehörten Etablierung der Verbindung sind wesentliche Parameter für die Durchführung der Kommunikation zwischen BLE-Zentralschnittstelle und Smartphone im Connection Mode den Sniffer-Modulen und somit auch den BLE-Satelliten-Schnittstellen bekannt. Hierbei handelt es sich beispielsweise um die Übertragungsparameter Connection Interval Timing und Frequency Hopping Sequence. Die so erfassten Parameter werden benutzt, um auch im Connection Mode durchgeführte Kommunikation zwischen der BLE-Zentralschnittstelle und dem mobilen BLE-Gerät mithören zu können. Der Session Key ist in der beispielhaften Ausführungsform noch aus der in Schritt 108a etablierten Verbindung bekannt, da die Session nicht beendet wurde.

Des Weiteren erfasst jede der BLE-Satelliten-Schnittstellen Daten, welche die Signalstärke der von dem Smartphone ausgesendeten Daten repräsentieren. Diese werden sodann für jede der BLE-Satelliten-Schnittstellen separat ausgewertet. Ob die Auswertung durch die BLE-Satelliten-Schnittstelle selbst oder nach Übertragung der Daten an eine Zentralschnittstelle durch diese erfolgt, ist unwesentlich.

Um eine genügend hohe Menge an Daten zwischen dem Smartphone und der BLE-Zentralschnittstelle bereitzustellen, die für die vorgesehene Auswertung zur Verfügung steht, stellt die BLE-Zentralschnittstelle im Connection Mode verschlüsselte wiederholte Challenge-Response-Anfragen an das Smartphone, welche von dem Smartphone entsprechend erwidert werden, sodass eine bidirektionale Challenge-Response-Kommunikation stattfindet (Schritt 114). Die Sniffer-Module setzen das Mithören fort (Schritt 115). Bei jedem Erwidern durch das Smartphone wird die verschlüsselte Nachricht von jeder der BLE-Satelliten-Schnittstellen mitgehört und für die Generierung eines weiteren RSSI-Werts genutzt, wobei für jede BLE-Satelliten-Schnittstelle ein separater RSSI-Wert abgelegt wird. Mit den erhaltenen Ergebnissen wird eine gemeinsame Datenbank von RSSI-Werten aufgefüllt, die von der BLE-Zentralschnittstelle verwaltet wird (Schritt 116). Dies wird so oft wiederholt, bis eine Abbruchbedingung erreicht ist (Abfrage 117), wobei die Abfragebedingung in dem Ausführungsbeispiel gegeben ist, wenn eines der folgenden Ereignisse eintritt:
- Time-out ist erreicht, beispielsweise, weil das Smartphone seinen Modus gewechselt hat,
- es sind genügend RSSI-Werte gesammelt (beispielsweise entsprechend einer als ausreichend vorgegebenen Anzahl) oder
- der RSSI unterschreitet einen vorgegebenen Schwellwert, beispielsweise aufgrund der zwischenzeitlich erfolgten Entfernung des Smartphones aus einem Lokalisierungsbereich hinaus.

In einem letzten Schritt erfolgt die Beendigung der Verbindung und die Bestimmung der Position des Smartphones (Schritt 118).

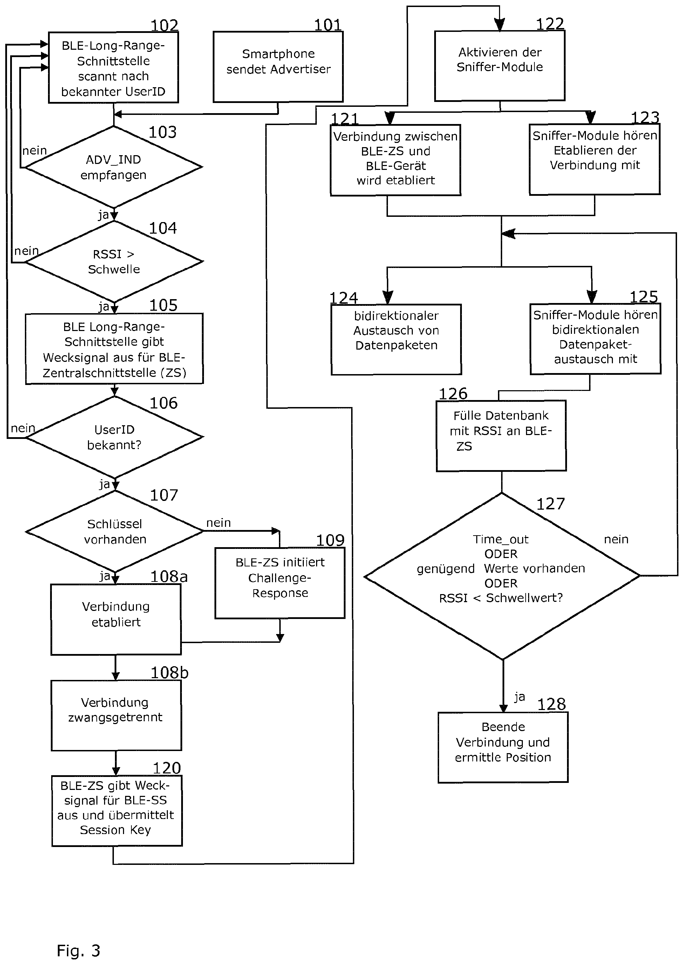

Eine weitere Ausführungsform des erfindungsgemäßen Verfahrens ist Fig. 3 zu entnehmen. Der Fig. 3 zu entnehmenden Ausführungsform sind viele Schritte zu entnehmen, die analog zu der Verfahrensführung gemäß Fig. 2 vorgesehen sind, wobei Verfahrensschritt 201 analog zu Schritt 101, Schritt 202 analog zu Schritt 101, usw. ausgebildet sind. Die beispielhafte Ausgestaltung der Fig. 3 unterscheidet sich von derjenigen der Fig. 2 in den Schritten 214 und 215. In Schritt 214 findet zwischen der BLE-Zentralschnittstelle und der BLE-Schnittstelle des BLE-Geräts ein bidirektionaler Austausch von Datenpaketen statt. In der gezeigten Ausgestaltung erfolgt dies durch ein Aussenden eines Empty_PDU von der BLE-Zentralschnittstelle zu der BLE-Schnittstelle des BLE-Geräts, welche umgehend ein Antwortsignal, ebenfalls vom Typ Empty PDU, aussendet. In Schritt 215 hören die Sniffer-Module diese bidirektionale Kommunikation mit. Mit Schritt 216 erfolgt an jeder der BLE-Satelliten-Schnittstellen einer Ermittlung eines RSSI des empfangenen Empty-PDU und ein Auffüllen einer von der BLE-Zentralschnittstelle verwalteten Datenbank mit RSSI-Werten, bevor mit Schritt 217 wieder in zu Schritt 117 analoger Vorgehensweise fortgefahren wird. Die Verwaltung der RSSI-Datenbank kann selbstverständlich auch durch eine andere Instanz erfolgen, beispielsweise durch ein zentrales Steuergerät.

## Patentansprüche

1. Verfahren zur Positionsbestimmung eines mobilen BLE-Geräts (1) relativ zu einem Fahrzeug (2),
wobei das mobile BLE-Gerät (1) eine BLE-Schnittstelle (3) und das Fahrzeug (2) ein System (4) von BLE-Schnittstellen (5, 6, 7, 8, 9, 10, 11, 12) aufweist,
wobei das System (4) von BLE-Schnittstellen (5, 6, 7, 8, 9, 10, 11, 12)
eine BLE-Zentralschnittstelle (5) als zentrale Kommunikationseinheit zum Generieren eines verschlüsselten oder unverschlüsselten Datentaustauschs mit dem mobilen BLE-Gerät (1) als Basis für die Erfassung von Signalstärken wenigstens an einer Position einer ersten BLE-Satelliten-Schnittstelle (6)
und die erste BLE-Satelliten-Schnittstelle umfasst,
wobei jede BLE-Schnittstelle eine Antenne aufweist und, soweit ein Bezug auf eine Position der BLE-Schnittstelle hergestellt ist, hiermit die Position der Antenne der BLE-Schnittstelle gemeint ist,
wobei die erste BLE-Satelliten-Schnittstelle (6) ein Sniffer-Modul (6a) aufweist oder mit dem Sniffer-Modul (6a) gekoppelt ist zur Befähigung der ersten BLE-Satelliten-Schnittstelle (6) zum Mithören einer BLE-Kommunikation zwischen BLE-Schnittstellen,
wobei das Verfahren die folgenden Schritte umfasst:
- Aktivieren des Sniffer-Moduls (6a),
- Etablierung einer Verbindung zwischen der BLE-Zentralschnittstelle (5) und der BLE-Schnittstelle (3) des mobilen BLE-Geräts (1),
- Mithören der Etablierung der Verbindung zwischen der BLE-Zentralschnittstelle (5) und dem mobilen BLE-Gerät (1) mittels des Sniffer-Moduls (6a) der ersten BLE-Satelliten-Schnittstelle (6),
- nach dem Mithören der Etablierung der Verbindung werden ermittelte Übertragungsparameter genutzt, um eine Kommunikation zwischen der BLE-Zentralschnittstelle (5) und der BLE-Schnittstelle (3) des mobilen BLE-Geräts (1) im Connection Mode mitzuhören,
- sobald die Kommunikation der BLE-Zentralschnittstelle (5) mit dem mobilen BLE-Gerät (1) im Connection Mode stattfindet, wiederholtes Erfassen der Signalstärke von durch die BLE-Schnittstelle (3) des mobilen BLE-Geräts (1) gesendeten Daten an der Position der ersten BLE-Satelliten-Schnittstelle (6) und Auswerten mehrerer nacheinander an der Position der ersten BLE-Satellitenschnittstelle (6) erfasster Signalstärken von durch die BLE-Schnittstelle(3) des mobilen BLE-Geräts gesendeten Daten für die Positionsbestimmung des mobilen BLE-Geräts (1) relativ zu dem Fahrzeug (2).

2. Verfahren nach Anspruch 1, wobei das Verfahren ein Koppeln (Pairen) des BLE-Geräts (1) und der BLE-Zentralschnittstelle (5) umfasst.

3. Verfahren nach Anspruch 1 oder nach Anspruch 2, **dadurch gekennzeichnet, dass** die BLE-Zentralschnittstelle (5) und das mobile BLE-Gerät (1) einen Session-Key aushandeln, wobei die BLE-Zentralschnittstelle (5) den Session-Key der ersten BLE-Satelliten-Schnittstelle (6) nach dem Aushandeln übermittelt.

4. Verfahren nach einem der vorhergehenden Ansprüche, **dadurch gekennzeichnet, dass** die Übertragungsparameter Connection Interval Timing Parameter und Frequency Hopping Sequence genutzt werden zum Mithören der Kommunikation zwischen der BLE-Zentralschnittstelle (5) und dem mobilen BLE-Gerät (1).

5. Verfahren nach einem der vorhergehenden Ansprüche, **dadurch gekennzeichnet, dass** zwischen der BLE-Zentralschnittstelle (5) und der BLE-Schnittstelle (3) des mobilen BLE-Geräts eine Kommunikation im Connection Mode erfolgt, welche das wiederholte Aussenden von Datenpaketen durch die BLE-Schnittstelle (3) des mobilen BLE-Geräts (1) umfasst, wobei ein Datenpaket von der BLE-Schnittstelle (3) des mobilen BLE-Geräts (1) ausgesendet wird in Reaktion auf den Empfang eines mittels der BLE-Zentralschnittstelle (5) ausgesendeten Datenpakets durch die BLE-Schnittstelle (3) des mobilen BLE-Geräts (1), und wobei die Datenpakete von dem Sniffer-Modul (6a) der ersten BLE-Satelliten-Schnittstelle (6) mitgehört werden und die Signalstärke der Datenpakete von der ersten BLE-Satelliten-Schnittstelle (6) erfasst wird.

6. Verfahren nach einem der vorhergehenden Ansprüche, **dadurch gekennzeichnet, dass** die durch die BLE-Schnittstelle (3) des mobilen BLE-Geräts (1) gesendeten Daten, verschlüsselte Datenpakete, und/oder
unverschlüsselte Datenpakete und/oder
leere Datenpakete
umfassen.

7. Verfahren nach einem der vorhergehenden Ansprüche, **dadurch gekennzeichnet, dass** die BLE-Zentralschnittstelle (5) im Connection Mode verschlüsselte wiederholte Challenge-Response-Kommunikation durchführt, mit der eine wiederholte Bereitstellung von durch das BLE-Gerät (1) gesendeten Daten erzwungen wird, die von dem Sniffer-Modul (6a) mitgehört wird.

8. Verfahren nach einem der vorhergehenden Ansprüche, wobei für eine oder mehrere gegebene BLE-Schnittstelle (5, 6, 7, 8, 9, 10, 11, 12) der fahrzeugseitigen BLE-Schnittstellen (5, 6, 7, 8, 9, 10, 11, 12) Advertise-Daten nur bei ihrem ersten Empfang durch die gegebene BLE-Schnittstelle (5, 6, 7, 8, 9, 10, 11, 12) für die Auswertung akzeptiert werden und/oder im Connection Mode gesendete Nachrichten nur bei ihrem ersten Empfang durch die gegebene BLE-Schnittstelle (5, 6, 7, 8, 9, 10, 11, 12) für die Auswertung akzeptiert werden.

9. Verfahren nach Anspruch 8, wobei für eine oder mehrere gegebene BLE-Satelliten-Schnittstelle (6, 7, 8, 9, 10, 11, 12) der fahrzeugseitigen BLE-Schnittstellen (6, 7, 8, 9, 10, 11, 12) Advertise-Daten nur bei ihrem ersten Empfang durch die gegebene BLE-Schnittstelle (6, 7, 8, 9, 10, 11, 12) für die Auswertung akzeptiert werden und/oder im Connection Mode gesendete Nachrichten nur bei ihrem ersten Empfang durch die gegebene BLE-Schnittstelle (6, 7, 8, 9, 10, 11, 12) für die Auswertung akzeptiert werden.

10. Verfahren nach Anspruch 9, wobei für jede gegebene BLE-Satelliten-Schnittstelle (6, 7, 8, 9, 10, 11, 12) der fahrzeugseitigen BLE-Schnittstellen (6, 7, 8, 9, 10, 11, 12) Advertise-Daten nur bei ihrem ersten Empfang durch die gegebene BLE-Schnittstelle (6, 7, 8, 9, 10, 11, 12) für die Auswertung akzeptiert werden und/oder im Connection Mode gesendete Nachrichten nur bei ihrem ersten Empfang durch die gegebene BLE-Schnittstelle (6, 7, 8, 9, 10, 11, 12) für die Auswertung akzeptiert werden.

11. Verfahren nach einem der vorhergehenden Ansprüche, wobei das fahrzeugseitige System (4) von BLE-Schnittstellen eine als BLE-Long-Range-Schnittstelle (8) ausgebildete Langreichweiten-BLE-Schnittstelle aufweist oder dass eine der BLE-Satelliten-Schnittstellen (6, 7, 8, 9, 10, 11, 12) als Langreichweiten-BLE-Schnittstelle in Ausführungsform einer BLE-Long-Range-Schnittstelle (8) ausgebildet ist, und
wobei die als BLE-Zentralschnittstelle (5) ausgebildete zentrale Steuerung (5) im Sleep-Modus versetzt ist und von einem Wecksignal aufgeweckt wird zum Versetzen der BLE-Zentralschnittstelle (5) in ihren aktiven Zustand, wobei das Wecksignal von der Langreichweiten-BLE-Schnittstelle (8) ausgegeben wird, nachdem die Langreichweiten-BLE-Schnittstelle (8) ein Advertise-Signal eines genäherten BLE-Geräts erfasst.

12. Verfahren nach einem der vorhergehenden Ansprüche, wobei das fahrzeugseitige System (4) von BLE-Schnittstellen eine BLE-Schnittstelle (8), bevorzugt eine der BLE-Satelliten-Schnittstellen (6, 7, 8, 9, 10, 11, 12), aufweist, die derart als Langreichweiten-BLE-Schnittstelle angepasst ist, dass die BLE-Schnittstelle für ein Senden und/oder Empfangen von Daten eingerichtet ist über eine im Vergleich zu den übrigen BLE-Schnittstellen größere Distanz,
wobei die als BLE-Zentralschnittstelle (5) ausgebildete zentrale Steuerung (5) im Sleep-Modus versetzt ist und von einem Wecksignal aufgeweckt wird zum Versetzen der BLE-Zentralschnittstelle (5) in ihren aktiven Zustand, wobei das Wecksignal von der Langreichweiten-BLE-Schnittstelle (8) ausgegeben wird, nachdem die Langreichweiten-BLE-Schnittstelle (8) ein Advertise-Signal eines genäherten BLE-Geräts erfasst.

13. Verfahren nach Anspruch 11 oder nach Anspruch 12, **dadurch gekennzeichnet, dass** die Langreichweiten-BLE-Schnittstelle (8) ein Wecksignal zum Wecken der BLE-Zentralschnittstelle (5) unter der Voraussetzung ausgibt,
dass das Advertise-Signal des genäherten BLE-Geräts (1) auf eine der Langreichweiten-BLE-Schnittstelle (8) vorbekannte Gerätekennung des BLE-Geräts (1) hinweist, und/oder
dass das Advertise-Signal mit einem RSSI-Wert oberhalb eines vorgegebenen Schwellwerts erfasst wird.

14. Verfahren nach einem der vorhergehenden Ansprüche, wobei die BLE-Zentralschnittstelle (5) im aktiven Zustand einen Scan zum Auffinden eines BLE-Geräts (1) ausführt, welches als für die BLE-Zentralschnittstelle (5) vertrauenswürdiges BLE-Gerät (1) hinterlegt ist, wobei bevorzugt der Scan auf eine oder mehrere spezifische Gerätekennung von als vertrauenswürdig hinterlegten BLE-Geräten beschränkt ist.

15. Verfahren nach einem der vorhergehenden Ansprüche, wobei die BLE-Zentralschnittstelle (5) ein Aushandeln eines gemeinsamen Schlüssels mit dem BLE-Gerät (1) mittels Challenge-Response veranlasst zum Herstellen einer Verbindung, der sowohl von dem BLE-Gerät (1) als auch von der zentralen Steuerung hinterlegt wird und bis zum Beenden der Verbindung als Session-Key genutzt wird.

16. Verfahren nach einem der vorhergehenden Ansprüche, wobei die erste BLE-Satelliten-Schnittstelle (6) und eine zweite BLE-Satelliten-Schnittstelle (7) sich in einem Sleep-Modus versetzt befinden und von einem Wecksignal aufgeweckt werden, das von der als BLE-Zentralschnittstelle (5) ausgebildeten zentralen Steuerung (5) ausgegeben wird, nachdem eine Kommunikation zwischen der BLE-Zentralschnittstelle (5) und dem BLE-Gerät (1) einen vorgegebenen Status eingenommen hat.

17. Verfahren nach einem der vorhergehenden Ansprüche, **dadurch gekennzeichnet, dass** jede BLE-Satelliten-Schnittstelle an seiner jeweiligen Position die Signalstärke eines selben von der BLE-Schnittstelle (3) des mobilen BLE-Geräts (1) ausgesendeten Datenpakets erfasst.

## Claims

1. Method for determining the position of a mobile BLE device (1) relative to a vehicle (2),
wherein the mobile BLE device (1) has a BLE interface (3) and the vehicle (2) has a system (4) of BLE interfaces (5, 6, 7, 8, 9, 10, 11, 12),
wherein the system (4) of BLE interfaces (5, 6, 7, 8, 9, 10, 11, 12)
comprises a BLE central interface (5) as a central communication unit for generating an encrypted or unencrypted data exchange with the mobile BLE device (1) as a basis for detecting signal strengths at least at one position of a first BLE satellite interface (6)
and comprises the first BLE satellite interface,
wherein each BLE interface has an antenna and, as far as a reference to a position of the BLE interface is made, the position of the antenna of the BLE interface is meant,
wherein the first BLE satellite interface (6) comprises a sniffer module (6a) or is coupled to the sniffer module (6a) to enable the first BLE satellite interface (6) to listen to BLE communication between BLE interfaces,
the method comprising the following steps:
- Activating the Sniffer Module (6a),
- establishing a connection between the BLE central interface (5) and the BLE interface (3) of the mobile BLE device (1),
- listening to the establishment of the connection between the BLE central interface (5) and the mobile BLE device (1) by means of the sniffer module (6a) of the first BLE satellite interface (6)
- after listening to the establishment of the connection, determined transmission parameters are used to listen to a communication between the BLE central interface (5) and the BLE interface (3) of the mobile BLE device (1) in connection mode,
- as soon as the communication of the BLE central interface (5) with the mobile BLE device (1) takes place in connection mode, repeatedly detecting the signal strength of data transmitted by the BLE interface (3) of the mobile BLE device (1) at the position of the first BLE satellite interface (6) and evaluating a plurality of signal strengths successively detected at the position of the first BLE satellite interface (6) of data transmitted by the BLE interface (3) of the mobile BLE device (1) for determining the position of the mobile BLE device (1) relative to the vehicle (2).

2. Method according to claim 1, said method comprising pairing the BLE device (1) and the BLE central interface (5).

3. Method according to claim 1 or according to claim 2, **characterized in that** the BLE central interface (5) and the mobile BLE device (1) negotiate a session key, wherein the BLE central interface (5) transmits the session key to the first BLE satellite interface (6) after negotiation.

4. Method according to one of the preceding claims, **characterized in that** the transmission parameters Connection Interval Timing Parameter and Frequency Hopping Sequence are used for monitoring the communication between the BLE central interface (5) and the mobile BLE device (1).

5. Method according to one of the preceding claims, **characterized in that** communication takes place between the BLE central interface (5) and the BLE interface (3) of the mobile BLE device in connection mode, said communication comprising the repeated transmission of data packets through the BLE interface (3) of the mobile BLE device (1), wherein a data packet is transmitted from the BLE interface (3) of the mobile BLE device (1) in response to the reception of a data packet transmitted by means of the BLE central interface (5) by the BLE interface (3) of the mobile BLE device (1), and wherein the data packets are monitored by the sniffer module (6a) of the first BLE satellite interface (6) and the signal strength of the data packets is detected by the first BLE satellite interface (6).

6. Method according to one of the preceding claims, **characterized in that** the data sent by the BLE interface (3) of the mobile BLE device (1) comprise
encrypted data packets, and/or
unencrypted data packets and/or
empty data packets.

7. Method according to one of the preceding claims, **characterized in that** the BLE central interface (5) repeatedly performs encrypted challenge-response communication in connection mode, forcing repeated provision of data sent by the BLE device (1), said data then being monitored by the sniffer module (6a).

8. Method according to one of the preceding claims, wherein for one particular or several particular of the entirety of the vehicle-side BLE interfaces (5, 6, 7, 8, 9, 10, 11, 12), advertise data are accepted for evaluation and/or messages sent in connection mode are accepted for evaluation only when received by the given BLE interface (5, 6, 7, 8, 9, 10, 11, 12) for the first time.

9. Method according to claim 8, wherein for one or more given BLE satellite interfaces (6, 7, 8, 9, 10, 11, 12) of the vehicle-side BLE interfaces (6, 7, 8, 9, 10, 11, 12), advertise data are accepted for evaluation only upon its first reception by the given BLE interface (6, 7, 8, 9, 10, 11, 12) and/or messages sent in connection mode are only accepted for evaluation when received by the given BLE interface (6, 7, 8, 9, 10, 11, 12) for the first time.

10. Method according to Claim 9, wherein for each given BLE satellite interface (6, 7, 8, 9, 10, 11, 12) of the vehicle-side BLE interfaces (6, 7, 8, 9, 10, 11, 12), advertise data are accepted for evaluation only upon its first reception by the given BLE interface (6, 7, 8, 9, 10, 11, 12) and/or messages sent in connection mode are only accepted for evaluation when received by the given BLE interface (6, 7, 8, 9, 10, 11, 12) for the first time.

11. Method according to one of the preceding claims, wherein the vehicle-side system (4) of BLE interfaces has a long-range BLE interface designed as a BLE long-range interface (8) or that one of the BLE satellite interfaces (6, 7, 8, 9, 10, 11, 12) is designed as a long-range BLE interface in the form of a BLE long-range interface (8), and
wherein the central controller (5) is designed as BLE central interface (5) and is set in sleep mode and is woken up by a wake-up signal to set the BLE central interface (5) to its active state, wherein the wake-up signal is output by the long-range BLE interface (8) after the long-range BLE interface (8) detects an advertise signal of an approaching BLE device.

12. Method according to one of the preceding claims, the vehicle-side system (4) of BLE interfaces having a BLE interface (8), preferably one of the BLE satellite interfaces (6, 7, 8, 9, 10, 11, 12), which is adapted as a long-range BLE interface in such a way that the BLE interface is set up for transmitting and/or receiving data over a greater distance than the other BLE interfaces,
wherein the central controller (5) designed as BLE central interface (5) is set in sleep mode and is woken up by a wake-up signal to set the BLE central interface (5) to its active state, wherein the wake-up signal is output by the long-range BLE interface (8) after the long-range BLE interface (8) detects an advertise signal of an approaching BLE device.

13. Method according to claim 11 or according to claim 12, **characterized in that** the long range BLE interface (8) outputs a wake-up signal for waking up the BLE central interface (5) under the condition
that the advertise signal of the BLE device (1) which had approached indicates a device identifier of the BLE device (1) which is previously known to the long-range BLE interface (8), and/or
that the advertise signal is acquired with an RSSI value above a predefined threshold.

14. Method according to one of the preceding claims, wherein the BLE central interface (5) in the active state performs a scan to find a BLE device (1) which is deposited as a trustworthy BLE device (1) for the BLE central interface (5), wherein preferably the scan is limited to one or more specific device identifiers of BLE devices deposited as trustworthy.

15. Method according to one of the preceding claims, wherein the BLE central interface (5) initiates a negotiation of a common key with the BLE device (1) by means of challenge-response to establish a connection, which key is stored by both the BLE device (1) and the central controller and is used as session key until the connection is terminated.

16. Method according to any one of the preceding claims, wherein the first BLE satellite interface (6) and a second BLE satellite interface (7) are in a sleep mode and are awakened by a wake-up signal issued by the central controller (5) formed as the BLE central interface (5) after a communication between the BLE central interface (5) and the BLE device (1) has taken a predetermined status.

17. Method according to one of the preceding claims, **characterized in that** each BLE satellite interface detects, at its respective position, the signal strength of a same data packet transmitted by the BLE interface (3) of the mobile BLE device (1).

## Revendications

1. Procédé pour déterminer la position d'un dispositif BLE mobile (1) par rapport à un véhicule (2),
dans lequel le dispositif BLE mobile (1) possède une interface BLE (3) et le véhicule (2) possède un système (4) d'interfaces BLE (5, 6, 7, 8, 9, 10, 11, 12),
dans lequel le système (4) d'interfaces BLE (5, 6, 7, 8, 9, 10, 11, 12)
comprends une interface centrale BLE (5) en tant qu'unité centrale de communication pour générer un échange de données cryptées ou non cryptées avec le dispositif BLE mobile (1) comme base pour détecter les intensités de signal à au moins une position d'une première interface satellite BLE (6)
et comprend la première interface satellite BLE,
dans lequel chaque interface BLE possède une antenne et, dans la mesure où il est fait référence à une position de l'interface BLE, la position de l'antenne de l'interface BLE est signifiée par celle-ci,
dans lequel la première interface satellite BLE (6) comprend un module renifleur (6a) ou est couplée au module renifleur (6a) pour permettre à la première interface satellite BLE (6) d'écouter la communication BLE entre les interfaces BLE,
le procédé comprenant les étapes suivantes :
- Activer le module renifleur (6a),
- Etablir une connexion entre l'interface centrale BLE (5) et l'interface BLE (3) du dispositif BLE mobile (1)
- Écouter de l'établissement de la connexion entre l'interface centrale BLE (5) et le dispositif BLE mobile (1) au moyen du module renifleur (6a) de la première interface satellite BLE (6)
- après avoir écouté l'établissement de la connexion, des paramètres de transmission déterminés sont utilisés pour écouter une communication entre l'interface centrale BLE (5) et l'interface BLE (3) du dispositif BLE mobile (1) en mode connexion,
- dès que la communication entre l'interface centrale BLE (5) et le dispositif BLE mobile (1) a lieu en mode connexion, détecter de manière répétée l'intensité du signal des données transmises par l'interface BLE (3) du dispositif BLE mobile (1) à la position de la première interface satellite BLE (6) et évaluer plusieurs intensités de signal détectées successivement à la position de la première interface satellite BLE (6) des données transmises par l'interface BLE (3) du dispositif BLE mobile (1) pour déterminer la position du dispositif BLE mobile (1) par rapport au véhicule (2).

2. Procédé selon la revendication 1, dans lequel le procédé comprends d'associer (Pairing) le dispositif BLE (1) et l'interface centrale BLE (5).

3. Procédé selon la revendication 1 ou selon la revendication 2, **caractérisé en ce que** l'interface centrale BLE (5) et le dispositif BLE mobile (1) négocient une clé de session, dans lequel l'interface centrale BLE (5) transmet la clé de session à la première interface satellite BLE (6) après négociation.

4. Procédé selon l'une des revendications précédentes, **caractérisé en ce que** les paramètres de transmission "Connection Interval Timing Parameter" et "Frequency Hopping Sequence" sont utilisés pour surveiller la communication entre l'interface centrale BLE (5) et le dispositif BLE mobile (1).

5. Procédé selon l'une des revendications précédentes, **caractérisé en ce que** de la communication a lieu entre l'interface centrale BLE (5) et l'interface BLE (3) du dispositif BLE mobile en mode connexion, qui comprend la transmission répétée de paquets de données par l'interface BLE (3) du dispositif BLE mobile (1), dans lequel un paquet de données est transmis à partir de l'interface BLE (3) du dispositif BLE mobile (1) en réponse à la réception d'un paquet de données transmis au moyen de l'interface centrale BLE (5) par l'interface BLE (3) du dispositif BLE mobile (1), et dans lequel les paquets de données sont surveillés par le module renifleur (6a) de la première interface satellite BLE (6) et l'intensité du signal des paquets de données est détectée par la première interface satellite BLE (6).

6. Procédé selon l'une des revendications précédentes, **caractérisé en ce que** les données transmises par l'interface BLE (3) du dispositif BLE mobile (1) comprennent
des paquets de données cryptées, et/ou
des paquets de données non chiffrés et/ou
des paquets vides.

7. Procédé selon l'une des revendications précédentes, **caractérisé en ce que** l'interface centrale BLE (5) effectue une communication cryptée répétée par défi-réponse en mode connexion, forçant la fourniture répétée de données envoyées par le dispositif BLE (1), qui est surveillé par le module renifleur (6a).

8. Procédé selon l'une des revendications précédentes, dans lequel, pour une ou plusieurs interfaces BLE données (5, 6, 7, 8, 9, 10, 11, 12) des interfaces BLE côté véhicule (5, 6, 7, 8, 9, 10, 11, 12), les données « Advertise » ne sont acceptés pour évaluation que lorsqu'elles sont reçues pour la première fois par l'interface BLE donnée (5, 6, 7, 8, 9, 10, 11, 12) et/ou les messages envoyés en mode connexion ne sont acceptés pour évaluation que lorsqu'ils sont reçus pour la première fois par l'interface BLE donnée (5, 6, 7, 8, 9, 10, 11, 12).

9. Procédé selon la revendication 8, dans lequel, pour une ou plusieurs interfaces satellites BLE données (6, 7, 8, 9, 10, 11, 12) des interfaces BLE côté véhicule (6, 7, 8, 9, 10, 11, 12), les données « Advertise » ne sont acceptés pour évaluation que lorsqu'elles sont reçues pour la première fois par l'interface BLE donnée (5, 6, 7, 8, 9, 10, 11, 12) et/ou les messages envoyés en mode connexion ne sont acceptés pour évaluation que lorsqu'ils sont reçus pour la première fois par l'interface BLE donnée (5, 6, 7, 8, 9, 10, 11, 12).

10. Procédé selon la revendication 9, dans lequel, pour chaque interface satellite BLE donnée (6, 7, 8, 9, 10, 11, 12) des interfaces BLE côté véhicule (6, 7, 8, 9, 10, 11, 12), les données « Advertise » ne sont acceptés pour évaluation que lorsqu'elles sont reçues pour la première fois par l'interface BLE donnée (5, 6, 7, 8, 9, 10, 11, 12) et/ou les messages envoyés en mode connexion ne sont acceptés pour évaluation que lorsqu'ils sont reçus pour la première fois par l'interface BLE donnée (5, 6, 7, 8, 9, 10, 11, 12).

11. Procédé selon l'une des revendications précédentes, dans lequel le système (4) d'interfaces BLE côté véhicule présente une interface à longue portée conçue comme une interface BLE à longue portée (8) ou que l'une des interfaces satellites BLE (6, 7, 8, 9, 10, 11, 12) est conçue comme une interface à longue portée sous la forme d'une interface BLE à longue portée (8), et
dans lequel le contrôleur central (5) conçu comme une interface centrale BLE (5) est mis en mode veille et est réveillé par un signal de réveil pour mettre l'interface centrale BLE (5) dans son état actif, dans lequel le signal de réveil est émis par l'interface BLE à longue portée (8) après que l'interface BLE à longue portée (8) a détecté un signal « Advertise » d'un dispositif BLE en approche.

12. Procédé selon l'une des revendications précédentes, le système côté véhicule (4) d'interfaces BLE ayant une interface BLE (8), de préférence l'une des interfaces BLE par satellite (6, 7, 8, 9, 10, 11, 12), qui est adaptée en tant qu'interface BLE à longue portée de telle manière que l'interface BLE est configurée pour transmettre et/ou recevoir des données sur une plus grande distance que les autres interfaces BLE,
dans lequel le contrôleur central (5) conçu comme une interface centrale BLE (5) est mis en mode veille et est réveillé par un signal de réveil pour mettre l'interface centrale BLE (5) dans son état actif, dans lequel le signal de réveil est émis par l'interface BLE à longue portée (8) après que l'interface BLE à longue portée (8) a détecté un signal « Advertise » d'un dispositif BLE en approche.

13. Procédé selon la revendication 11 ou selon la revendication 12, **caractérisé en ce que** l'interface BLE à longue portée (8) émet un signal de réveil pour réveiller l'interface centrale BLE (5) sous la condition
**en ce que** le signal d'annonce du dispositif BLE approché (1) indique un identificateur de dispositif du dispositif BLE (1) qui est préalablement connu de l'interface BLE à longue portée (8), et/ou
**que** le signal « Advertise » est détecté avec une valeur RSSI supérieure à un seuil prédéfini.

14. Procédé selon l'une des revendications précédentes, dans lequel l'interface centrale BLE (5) à l'état actif exécute un balayage pour trouver un dispositif BLE (1) qui est déposé comme dispositif BLE digne de confiance (1) pour l'interface centrale BLE (5), dans lequel de préférence le balayage est limité à un ou plusieurs identificateurs de dispositif spécifiques de dispositifs BLE déposés comme étant dignes de confiance.

15. Procédé selon l'une des revendications précédentes, dans lequel l'interface centrale BLE (5) initie une négociation d'une clé commune avec le dispositif BLE (1) au moyen d'une defi-réponse pour établir une connexion, laquelle clé est stockée à la fois par le dispositif BLE (1) et le contrôleur central et est utilisée comme clé de session jusqu'à ce que la connexion soit terminée.

16. Procédé selon l'une des revendications précédentes, dans lequel la première interface satellite BLE (6) et une deuxième interface satellite BLE (7) sont en décalage de mode de veille et sont réveillées par un signal de réveil qui est émis par la commande centrale (5) conçue comme une interface centrale BLE (5) après qu'une communication entre l'interface centrale BLE (5) et le dispositif BLE (1) a pris un état prédéterminé.

17. Procédé selon l'une des revendications précédentes, **caractérisé en ce que** chaque interface satellite BLE détecte à sa position respective l'intensité du signal d'un même paquet de données transmis par l'interface BLE (3) du dispositif BLE mobile (1).
